# EUROPÄISCHE PATENTANMELDUNG

(11) **EP 1 413 844 A2**
(43) Veröffentlichungstag der Anmeldung: **28.04.2004**
(21) Anmeldenummer: 03023175.7
(22) Anmeldetag: 13.10.2003
(51) Int. Cl.: F28F 3/04, F28D 9/00, F28F 13/12, B01J 19/00

(54) **Temperierkanäle**

(30) Priorität: 25.10.2002 DE 10249724
(71) Anmelder: Bayer Aktiengesellschaft, 51368 Leverkusen (DE)
(72) Erfinder: Jähn, Peter, 51375 Leverkusen (DE); Ochmann, Klaus, 51377 Leverkusen (DE)

(57) **Zusammenfassung**

Temperierkanäle für hohe Differenzdrücke und große Temperierbereiche bestehend aus zwei entgegengesetzt gelegten Blechen oder Schichten (1,1'), die in ihrer Trenn- bzw. Kontaktebene eingebrachte einseitige Vertiefungen (2) haben, wozwischen mindestens ein Lochblech eingesetzt wird,
die einzelnen Vertiefungen (2) materialabtragend und/oder materialverdrängend in die Seitenbleche eingearbeitet sind und Vertiefungen (2) mit gleichem Vertiefungsvolumen nebeneinander liegen und keine Verbindung zueinander haben und mehrere nebeneinander liegende Vertiefungen eine Vertiefungsreihe oder Vertiefungskette bilden,
die geometrische Fläche einer jeden Vertiefung eine größere Ausdehnung zur Blechbreite als zur Blechlänge hat,
die größere Längsachse der Vertiefung unter einem Winkel α von 5 - 85 Grad zur Mittelachse der Vertiefungsreihe oder Vertiefungskette steht, und das eine Blech (1) gegenüber dem anderen Blech (1') um 180° gewendet ist
und dieser Durchflusskanal druckstabil ist und die Höhe des einzelnen Hochleistungs-Temperierkanals nicht größer ist, als die Dicke der verwendeten Bleche.

## Beschreibung

Die vorliegende Erfindung betrifft Hochleistungs-Temperierkanäle für Wärmeaustauscherrohre, worin einphasige flüssige oder gasförmige Substanzen möglichst schnell, gleichmäßig und produktschonend temperiert werden können und möglichst unabhängig von der jeweiligen Viskosität der zu temperierenden Substanzen auch für einen Einsatz in mikrostrukturierten Apparaten funktionieren.

In der chemischen Industrie sind produktführende Kanäle insbesondere in Form von Rohrleitungen bekannt. Die Temperierleistung dieser produktführenden Kanäle ist begrenzt, da die wärmeaustauschende Fläche klein ist und je nach Strömungsgeschwindigkeit und Wärmeleiteigenschaft der jeweiligen Flüssigkeit bzw. des jeweiligen Gases ein Temperaturgradient zwischen Kanalmitte und der temperierten Kanalinnenfläche entsteht. Zur Intensivierung der Temperiervorgänge in Rohrkanälen sind Einsätze oder Bauteile bekannt, die als statische Mischer oder als Turbulenzelemente bezeichnet in produktdurchströmten Kanälen eingesetzt werden. Beim Einsatz dieser Einbauten verbessert sich der Temperiervorgang geringfügig. Deshalb werden derartige Einbauelemente wie statische Mischer und Turbulenzelemente in besonderen Ausführungen in den Kanal verlötet, um die produktberührte Temperierfläche im Produktraum zu vergrößern.

Es ist bekannt, dass mikrostrukturierte Apparaten hohe Wärmeübertragungsleistungen ermöglichen. Mikrostrukturapparate haben parallel angeordnete produktführende Kanäle mit quadratischem oder rechteckigem Strömungsquerschnitt. Diese Technik bietet eine große wärmeaustauschende Fläche bezogen auf das Produkt- oder Apparatevolumen. Nachteilig bei der Mikrostrukturtechnik sind die kleinen Strömungsquerschnitte die häufig bei nicht filtrierten Stoffen zur Verstopfung neigen. In Produktionsprozessen sind Stoffe oder Produkte oft mit Verunreinigungen belastet, so dass die kleinen µm-Kanäle (µ-Bereich) schnell verstopfen und es zum Ausfall der Mikrostrukturapparate kommt. Aus diesem Grunde werden mikrostrukturierte Apparate nur in verfahrenstechnischen Prozessen mit hochreinen Ausgangsstoffen eingesetzt. Des Weiteren werden mikrostrukturierte Apparate mit speziellen und kostenintensiven Fertigungsmethoden hergestellt, so dass stoffführende Kanallängen nicht in großen Längen bzw. Abmessungen verfügbar sind weil die Apparate nicht wirtschaftlich gefertigt werden können.

Aus EP-A 0 659 500 sind zur Verbesserung von Wärmeaustauschvorgängen Flachrohre bekannt, die durch Plattwalzen von runden Rohren hergestellt werden. In Flachrohren ist der Abstand von temperierter Kanalinnenwand zur Kanalmitte verkleinert. Nachteilig bei dieser Ausführung ist die kleine Temperierfläche und die geringe Druckstabilität der Flachrohre. Werden höher viskose Stoffe in derartigen Flachkanälen temperiert, kommt es zu einer ungleichmäßigen Geschwindigkeitsverteilung, die wiederum eine ungleichmäßige Temperaturverteilung im Produktstrom erzeugt. Höher viskose Stoffe erzeugen zusätzlich hohe Differenzdrücke, so dass diese Flachrohre aufgrund der geringen Druckstabilität zum Ausbeulen neigen und nicht formstabil sind. Hohe auftretende Differenzdrücke in Flachrohren führen zudem dazu, dass der rechteckige Querschnitt der Flachrohre sich zurückbildet und wieder einen runden Querschnitt annimmt. Zur Erhöhung der Druckstabilität eines Flachrohres kann die Rohrwandstärke erhöht werden mit dem Nachteil, dass der Wärmeleitwiderstand sich ebenfalls erhöht.

Aus EP-A 0 302 232 ist ein Flachrohr für einen Wärmetauscher bekannt, welches aus einem gebogenen Blechstreifen herstellbar ist. Dieses Flachrohr kann auch mit Turbulenzeinlagen versehen werden, wobei in einem Lötvorgang alles dicht verlötet wird. Solch gebogene Blech-Flachrohre sind nur für geringe Differenzdrücke einsetzbar. Sobald das Flachrohr sich aufgrund eines hohen Druckes aufbiegt, verliert es die verbesserten Wärmeübertragungseigenschaften. Die Druckstabilität des beschriebenen Flachrohres wird erhöht, indem Stege durch Falzung eingearbeitet werden. Die Stege verändern das Flachrohr dahingehend, dass ein mehrkanaliger Flachkanal mit höherer Druckstabilität entsteht. Der entstehende Einzelkanal des Flachrohres ist nahezu quadratisch. Der quadratische Strömungsquerschnitt führt jedoch dazu, dass nur zwei Temperierflächen wirksam sind. Zudem ist der Abstand von Kanalmitte zur inneren Temperierfläche so groß, dass sich ein Temperaturgradient einstellt, der eine gleichmäßige schnelle und produktschonende Temperierung verhindert. Soll ein höher-viskoser Stoff bei niedriger, laminarer Strömungsgeschwindigkeit temperiert werden, sind die Temperaturunterschiede im Strömungsquerschnitt besonders ausgeprägt.

Aus EP-A 0 624 771 ist ein Flachrohr für Wärmeaustauscher mit elliptischem Querschnitt bekannt, in das Turbulenzelemente eingesetzt werden. Die Turbulenzelemente bestehen aus gebogenen Drähten, die nachträglich in das elliptische Rohr eingeschoben werden und sich auf Grund der Biegekontur im elliptischen Flachrohr verklemmen. Turbulenzeinlagen sind für die Temperierung von wässrigen Stoffen bei hohen Strömungsgeschwindigkeiten einsetzbar. Der Temperierprozess von höher viskosen Flüssigkeiten mit niedrigen Strömungsgeschwindigkeiten wird mit diesen aus Draht gebogenen Turbulenzelementen nicht entscheidend verbessert.

Schließlich werden in der EP-A 1 213 556 Flachrohre mit mehreren nebeneinander angeordneten Strömungsbereichen beschrieben die in einem Sammelrohr münden. Die Flachrohre bestehen aus mehreren parallelen Strömungskanälen, so dass die Wände der Einzelkammern eine druckstabilisierende Wirkung auf die Form des Flachrohres haben. Mehrere parallel angeordnete Flachrohre, die alle in ein Sammelrohr münden bilden einen Wärmeaustauscher. Die Form des beschriebenen Flachrohres wird im Strangpressverfahren mit z.B. Aluminium hergestellt. Die Herstellung dieser Flachrohre ist kompliziert und es bedarf besonderer Werkzeuge. Infolgedessen sind derartige Flachrohre nicht in hoch-korrosionsfesten Werkstoffen herstellbar.

US-A 50 50 671 offenbart einen aus thermoplastischen Polymeren bestehenden Platten-Wärmeaustauscher der aus zwei Platten besteht.

Aus US-A 5 826 646 ist ein Flachrohrwärmeaustauscher für Fluide bekannt, die vom flüssigen in den gasförmigen Zustand aber auch umgekehrt temperiert werden. Diese bestehen aus zwei sich gegenüberliegenden Platten. Für die Temperierung einphasiger Systeme ist dieser Wärmeaustauscher nur wenig geeignet.

Es bestand daher die Aufgabe, die bekannten Nachteile der Plattenwärmeaustauschertechnik und der Rohrwärmeaustauscher wesentlich zu verbessern und Hochleistungs-Temperierkanäle für den Einsatz in Wärmeaustauschern zur Temperierung einphasiger flüssiger und gasförmiger Substanzen in der Produktionstechnik (im cm-Maßstab), im Labor- und Technikumsmaßstab (im mm-Maßstab) und in der Mikrostrukturtechnik (im µm-Maßstab) zu finden, die eine schnelle, gleichmäßige und produktschonende Temperierung über einen größeren Viskositätsbereich (bis 100.000 mPas) bei gleichzeitig geringem Hold-up und großer wärmeübertragender Fläche auf der Produktseite haben. Diese Hochleistungs-Temperierkanäle sollen besonders robust und kompakt sein, so dass eine hohe Druckstabilität (bis zu 500 bar) erreicht wird, ohne dass die Hochleistungs-Temperierkanäle weitere Stützkomponenten benötigen. Die Forderungen nach kompakter Bauform, einem geringen Hold-up in Verbindung mit einer guten Produktvermischung im Kanal erweitert die Aufgabenstellung. Des Weiteren sollen bekannte Betriebsprobleme wie das Fouling und die damit verbundene Verstopfungsgefahr wesentlich verringert werden.

Die Lösung der Aufgabe und somit Gegenstand der Erfindung sind Hochleistungs-Temperierkanäle für hohe Differenzdrücke und große Temperierbereiche bestehend aus zwei entgegengesetzt gelegten Blechen oder Schichten, die in ihrer Trenn- bzw. Kontaktebene eingebrachte einseitige Vertiefungen haben, dadurch gekennzeichnet, dass
die Höhe des einzelnen Hochleistungs-Temperierkanals nicht größer ist als die Dicke der verwendeten Bleche,
die einzelnen Vertiefungen materialabtragend und/oder materialverdrängend in das jeweilige Blech eingearbeitet sind und dabei scharfkantige Ränder zur Blechtrennebene bilden und die Blechdicke im Vertiefungsbereich sich lokal bis zu 90 % reduziert, und in der Blechtrennebene Vertiefungen mit gleicher Vertiefungsfläche und gleichem Vertiefungsvolumen nebeneinander liegen und keine Verbindung zueinander haben und mehrere nebeneinander liegende Vertiefungen eine Vertiefungsreihe oder Vertiefungskette bilden,
die geometrische Fläche einer jeden Vertiefung in der Blechtrennebene eine größere Ausdehnung zur Blechbreite als zur Blechlänge hat,
die größere Längsachse der Vertiefung unter einem Winkel α von 5 - 85 Grad zur Mittelachse der Vertiefungsreihe oder Vertiefungskette steht, wobei das eine Blech gegenüber dem anderen Blech um 180° gewendet ist, wodurch mindestens drei der unter gleichem Winkel stehenden Vertiefungen sich teilweise überlappen und/oder kreuzen und einen Durchflusskanal bilden, dessen Strömungsquerschnitt im Bereich der Blechtrennebene ist,
zwischen die Bleche oder Schichten mindestens ein Lochblech als Turbulenzerreger eingesetzt wird
und dieser Durchflusskanal druckstabil ist.

Die erfindungsgemäßen Hochleistungs-Temperierkanäle, die im einfachsten Fall einen einzelnen Strömungskanal darstellen mit einheitlichen Strömungsquerschnitt, sind hervorragend geeignet, sowohl einphasige flüssige als auch gasförmige Substanzen schnell, gleichmäßig und produktschonend auf die gewünschte Temperatur zu temperieren. Sie eignen sich besonders in der Ausgestaltung von Flachkanälen und sind somit zur Anwendung in Wärmeaustauschern bestens geeignet, wo beispielsweise Flüssigkeiten (oder Gase) rasch von einer hohen Temperatur auf eine niedrige Temperatur gekühlt werden müssen, oder umgekehrt.

Die erfindungsgemäßen Hochleistungs-Temperierkanäle, gebildet aus einer Vielzahl gleicher hintereinander positionierter Vertiefungen mit scharfkantigen Rändern zur Blechtrennebene, bilden im Bereich der Blechtrennebene einen über die gesamte Blechlänge bzw. Kanallänge (einen) konstanten Strömungsquerschnitt, so dass bei gleichzeitig vollständiger Anströmung des Strömungsquerschnittes und vollständiger Abströmung aus dem Hochleistungs-Temperierkanal ein gleichmäßiges Strömungsgeschwindigkeitsprofil, das einer Pfropfenströmung nahe kommt, erzwungen wird, so dass selbst bei laminaren bis turbulenten Strömungsverhältnissen ein enges Verweilzeitspektrum das Temperieren von temperaturempfindlichen Substanzen in extrem kurzer Zeit (millisekunden-Bereich) ermöglicht. Zusätzlich wird der Hochleistungs-Temperierkanal unempfindlich gegen Druckveränderungen im Durchfluss, so dass immer ein gleiches Strömungsgeschwindigkeitsprofil herrscht.

Deshalb ist ein bevorzugter Gegenstand der vorliegenden Erfindung, dass die zuführenden und ableitenden Querschnitte für das Fluid gleich oder größer sind, als der über die gesamte Länge konstante Strömungsquerschnitt des Hochleistungs-Temperierkanals.

Beim Durchströmen des Hochleistungs-Temperierkanals bildet sich ein enges bzw. kleines Verweilzeitspektrum aus, und das zu temperierende Produkt wird ständig über den gesamten Strömungsquerschnitt vollständig vertikal und horizontal umgeschichtet und gemischt, so dass beim Durchströmen des Fluids im Hochleistungs-Temperierkanal auftretende Temperaturdifferenzen zwischen temperierter Wand und mittlerem Strömungsbereich schnell kompensiert werden, und es zu keiner temperaturbedingten Produktschädigung kommt. Zusätzlich wird aufgrund des gleichmäßigen Temperaturspektrums im produktseitigen Strömungsquerschnitt immer mit maximal möglicher Temperaturdifferenz temperiert.

Benachbarte Vertiefungen, die eine Vertiefungsreihe in einem Hochleistungs-Temperierkanal bilden, haben in der Blechebene gleiche Vertiefungsflächen, wobei jedoch das Vertiefungsvolumen benachbarter Vertiefungen unterschiedlich groß sein kann, so dass lokal höhere Strömungsgeschwindigkeiten und ein geringeres Hold-up erzwungen wird, zu Lasten einer verringerten Wärmeaustauschfläche.

Überraschenderweise zeigte sich, dass trotz geringerer Wärmeaustauschfläche die Temperierleistung nicht proportional geringer wurde.

Deshalb ist ein bevorzugter Gegenstand der vorliegenden Erfindung, dass benachbarte Vertiefungen mit gleicher Vertiefungsfläche in der Blechtrennebene unterschiedliche Vertiefungsvolumina haben und einen Hochleistungs-Temperierkanal bilden, der dadurch Abschnitte mit unterschiedlichem Hold-up und unterschiedlicher Strömungsgeschwindigkeit besitzt.

Ein Hochleistungs-Temperierkanal gebildet aus unterschiedlichen und wechselnden Vertiefungsvolumina, wodurch benachbarte Vertiefungen mit unterschiedlichen Vertiefungshöhen in gleich dicken Einzelblechen eingearbeitet sind, kann auch gebildet werden, indem zwei unterschiedlich dicke Bleche zur Bildung eines Kanals verwendet werden und die Vertiefungen lokal eine gleiche Blechdickenminderung verursachen, und dadurch in jedem Blech eine andere Strömungsgeschwindigkeit erzwungen wird.

Deshalb ist ein bevorzugter Gegenstand der vorliegenden Erfindung, dass ein Hochleistungs-Temperierkanal aus zwei unterschiedlich dicken Blechen besteht, in denen Vertiefungen mit gleicher Vertiefungsfläche in der Blechtrennebene und mit gleichen und/oder verschiedenen Vertiefungsvolumina eingebracht sind, und Vertiefungen mit unterschiedlichem Volumen in Strömungsrichtung abwechselnd in einem Blech oder alternierend in beiden Blechen positioniert sind.

Alternierende unterschiedliche Vertiefungsvolumina in den Blechen erzwingen in Strömungsrichtung eine wechselnde Strömungsgeschwindigkeit und wirken einem Fouling entgegen.

Die erfindungsgemäßen Hochleistungs-Temperierkanäle sind besonders geeignet, Einsatzstoffe der verschiedensten Viskositäten, bevorzugt in einem Viskositätsbereich zwischen 0,1 mPa·s bis 100 000 mPa·s, besonders bevorzugt von 0,1 mPa·s bis 10000 mPa·s zu temperieren.

Bedingt durch die jeweilige Viskosität des Einsatzstoffes liegen die Strömungsvorgänge in den erfindungsgemäßen Hochleistungs-Temperierkanälen im laminaren bis turbulenten Bereich und es herrschen je nach Viskosität Differenzdrücke von 0,1 bar bis 500 bar, bevorzugt von 0,1 bar bis 100 bar und besonders bevorzugt von 0,1 bis 50 bar.

Die erfindungsgemäßen Hochleistungs-Temperierkanäle eignen sich insbesondere für die Temperierung in einem weiten Temperaturbereich von -80°C bis 500°C, besonders für einen Temperaturbereich von -20°C bis 325°C und besonders bevorzugt für den Bereich 20°C bis 200°C.

Der große Temperaturbereich ermöglicht insbesondere in Kombination mit den verschiedenen zum Einsatz kommenden Werkstoffen die Verwendung bei fast allen Aufgabenstellungen.

In den erfindungsgemäßen Hochleistungs-Temperierkanälen können aber auch zwei oder mehrere Substanzen gleichzeitig temperiert werden. Dabei kann es vorkommen, dass diese miteinander reagieren und Reaktionswärme freisetzen, die unmittelbar abgeführt werden muss. Es hat sich gezeigt, dass die erfindungsgemäßen Hochleistungs-Temperierkanäle bedingt durch die Geometrie der Vertiefungen eine große wärmeübertragende Fläche auf der Produktseite haben und ein geringeres Hold-up aufweisen, als vergleichbare aus dem Stand der Technik bekannte Temperierkanäle. Gleichzeitig bewirken die erfindungsgemäßen Hochleistungs-Temperierkanäle aufgrund ihrer inneren Geometrie eine hohe mischende Wirkung über den gesamten Strömungsquerschnitt auf die durchströmenden Substanzen und vermeiden somit Temperaturgradienten im durchströmenden flüssigen oder gasförmigen Medium/-Gemisch.

Deshalb ist auch Gegenstand der vorliegenden Erfindung, dass der Hochleistungs-Temperierkanal als Strömungsreaktor zum Einsatz kommt, wenn zwei verschiedene Substanzen zugeführt werden die miteinander eine neue Substanz erzeugen.

Es hat sich gezeigt, dass das durch die Volumengeometrie der Vertiefungen geringe produktseitige Volumen und die gute Durchmischung mittels der scharfkantigen Vertiefungen sich positiv auf das Verweilzeitspektrum auswirken. Insbesondere bei höher-viskosen Stoffen verkleinert sich das Verweilzeitspektrum deutlich im Vergleich zu den Temperierkanälen aus dem Stand der Technik.

Die scharfkantigen Übergänge zu den Vertiefungen verhindern keilförmige Spalten im Bereich der Blechtrennebene, so dass keine Produktablagerungen in diesen Bereichen auftreten und ein Fouling vermieden wird.

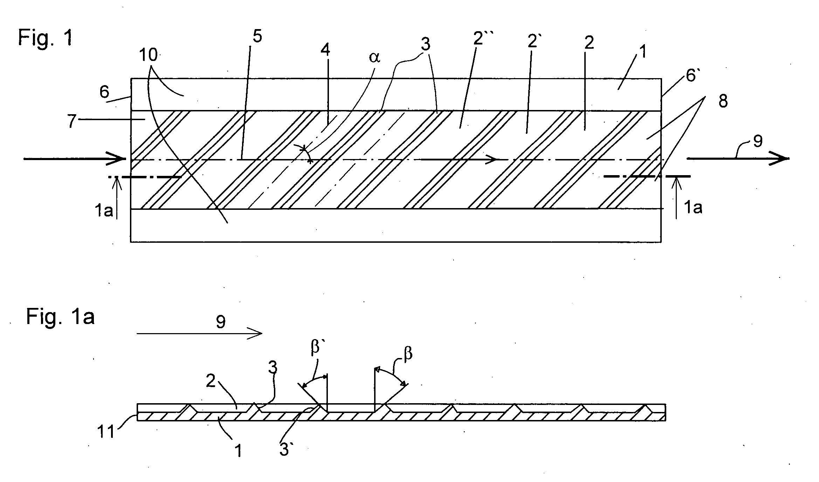

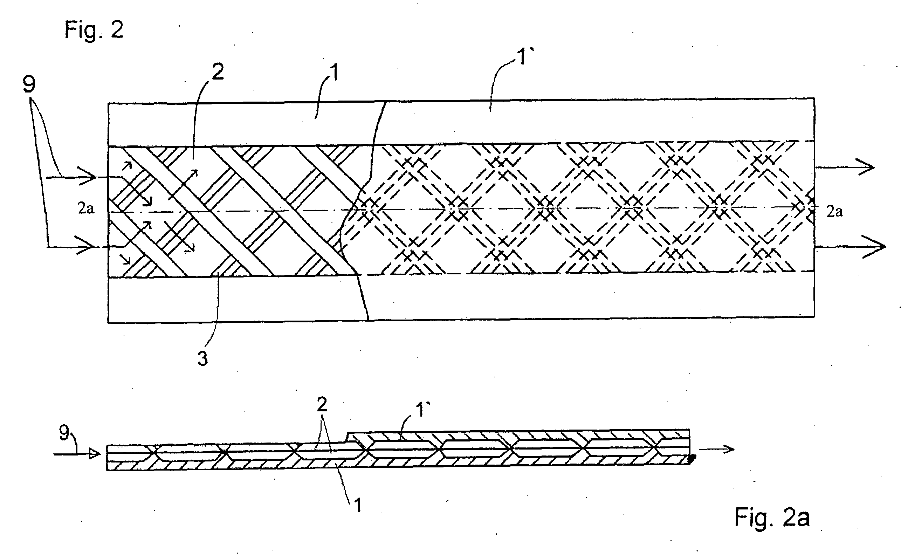

Die vielen nebeneinander liegenden, zur Blechbreite ausgedehnten Vertiefungen im Blech bzw. in der Blechschicht, die eine Vertiefungsreihe bzw. -kette bilden, haben in der jeweiligen Blechebene keine Verbindungen zueinander (Fig. 1). Sobald zwei Bleche zusammen gelegt werden und sich gleiche oder ähnliche Vertiefungsreihen direkt mit ihrer Vertiefungsfläche und ihrem Vertiefungsvolumen gegenüber liegen, bilden sich gegenüberliegende, teilweise überlappende und kreuzende Hohlräume (Fig. 2). Ein durchströmender flüssiger oder gasförmiger Stoff strömt zwischen den Vertiefungen der beiden Bleche hin und her und das Fluid wird ständig durchmischt. Infolgedessen entstehen keine großen Temperaturgradienten, und es erfolgt eine schnelle gleichmäßige Temperierung des durchströmenden Stoffes. Die unter dem Winkel α stehende Längsachse der Vertiefung und damit auch die begrenzenden Wände der Vertiefungen, wirken als Leitflächen bzw. Umlenkkonturen (Fig. 2). Sie unterstützen zudem eine Querströmung zur Längsachse der Vertiefung. Temperaturempfindliche Substanzen können aufgrund der Mischwirkung vor thermischer Schädigung geschützt werden.

Die eingebrachten Vertiefungen haben in der Trenn- bzw. Kontaktebene der Schichten ihre größte Fläche. Mit zunehmenden parallelen Abstand zur Trenn- oder Kontaktebene verringert sich die geometrische Fläche der Vertiefung, so dass sich von der Kontaktebene bis zur maximalen Vertiefungshöhe in den Schichten geneigte Flächen bilden, die zur Hauptströmungsrichtung unter einem Winkel stehen. Diese Flächen bzw. Leitflächen können gerade oder gekrümmt sein, so dass sie den durchströmenden Stoff in die gegenüber liegenden Vertiefungen lenken und eine zwangsgeführte Strömung unterstützen.

Die vielen nebeneinander liegenden, zur Blechebene ausgedehnte Vertiefungen im Blech bzw. in der Blechebene, die eine Vertiefungsreihe bzw. Vertiefungskette bilden haben in der Blechebene gleiche Vertiefungsflächen, wobei das Vertiefungsvolumen jedoch in der Vertiefungsreihe variieren kann. Dadurch werden lokal höhere Strömungsgeschwindigkeiten und ein geringeres Hold-up bei gleichzeitig verändertem Druckverlust erzeugt.

Gegenstand der vorliegenden Erfindung ist deshalb, dass Vertiefungsreihen mit gleicher Vertiefungsfläche in der Blechebene und verschiedenen Vertiefungsvolumen in einer Reihe gebildet werden.

Die in Strömungsrichtung geneigten oder gekrümmten Seitenflächen der Vertiefungen, stehen von der Kontaktebene bis zum höchsten Niveau der Vertiefung unter einem Winkel β.

Diese gekrümmten oder geneigten Flächen unterstützen den "vertikalen Mischeffekt" und lenken den durchströmenden Stoff in die gegenüberliegende Vertiefungsreihe. Die gekrümmten bzw. schräggestellten Flächen wirken möglichen Stoffablagerungen, insbesondere bei vorliegenden laminaren Strömungsgeschwindigkeiten entgegen, so dass alle Bereiche des Hochleistungs-Temperierkanals gut durchströmt sind. Sind die seitlichen Flächen gerade, dann stehen sie unter einem bevorzugten Winkel β von 60 Grad.

In anderen bevorzugten Ausführungen stehen die seitlichen Flächen der Vertiefungen in der Schicht unter einem Winkel β von 20 bis 80 Grad, bevorzugt unter einem Winkel von 40 bis 60 Grad.

Die gegenüberliegenden Seitenflächen einer Vertiefung 2 in Fig. 1a in einer Schicht können sich unterscheiden, so dass die Fläche auf der einströmenden Seite 3 der Vertiefung einen Winkel β' hat und die Fläche auf der abströmenden Seite 3' unter einem Winkel β steht. Beide Winkel β und β' haben einen Winkel von 20 bis 80 Grad.

Die Hochleistungs-Temperierkanäle können beispielsweise aus Blechen mit einer Dicke von 0,5 mm bis 50 mm vorteilhaft hergestellt werden.

Dadurch, dass die längsausgedehnten Vertiefungen quer bzw. unter einem Winkel zur Hauptströmungsrichtung stehen, wird das durchströmende Medium im Hochleistungs-Temperierkanal ein- oder mehrfach geteilt und in Folge wieder zusammen geführt und dadurch ständig durchmischt, so dass keine Temperaturspitzen, ein schneller Temperaturausgleich und somit eine produktschonende Temperierung erfolgt.

Die längsausgedehnten Vertiefungen unterstützen vorzugsweise den "horizontalen Mischeffekt" auf den durchströmenden Stoff.

Die im rechten Winkel zur Hauptströmungsrichtung ermittelte Länge der Vertiefung ist identisch mit der inneren Breite des Flachkanals und ist kleiner als die Schicht- oder Blechbreite. Die doppelte Tiefe der Vertiefung im Einzelblech ist identisch mit der inneren Höhe des Flachkanals und ist immer kleiner als die zweifache Blechdicke. Daraus resultiert der Brutto-Strömungsquerschnitt des Flachkanals. Die Vertiefungsreihe ist immer gleichbedeutend mit dem Einzel-Hochleistungs-Temperierkanal.

Der Mittenabstand zweier Vertiefungen einer Vertiefungsreihe ist mindestens so groß wie die Breite der Vertiefung, um einen spaltarmen Temperierkanal zu gestalten. Es kann eine bevorzugtes Verhältnis gebildet werden, bei dem die Vertiefungsbreite zum Mittenabstand der Vertiefungen größer 1 ist. Dabei kontaktieren sich die Ränder der Vertiefungen auf der jeweiligen Schichtoberfläche in der Trennebene nur punktförmig. Es entstehen keine Spalten die Produktablagerungen fördern und möglicherweise eine Verstopfung des Temperierkanals begünstigen.

In besonderen Ausführungen der erfindungsgemäßen Hochleistüngs-Temperierkanäle ist das Verhältnis von Vertiefungsbreite zum Mittenabstand größer 0,7 bis kleiner 2, bevorzugt größer 0,8 bis kleiner 1,5 und besonders bevorzugt beträgt das Verhältnis größer 1 bis kleiner 1,1.

Die mit Vertiefungen versehenen Blechstreifen oder Schichten in den erfindungsgemäßen Hochleistungs-Temperier-Kanälen haben einen nicht strukturierten Randbereich, der bei einem Schweiß- bzw. Lötvorgang dicht verschlossen wird. Das Verschweißen der beiden Bleche oder Schichten zu einem Hochleistungs-Temperierkanal führt zu druckdichten und hochstabilen Strömungskanälen.

Die nicht strukturierten Randbereiche können parallel zur Vertiefungsreihe ebenfalls mit kleinen Vertiefungen in Form von Nuten versehen werden, so dass diese Vertiefungsnuten im Randbereich als Lötmittel-Depot fungieren. Dort eingebrachtes z.B. pastenförmiges Lot kann in einem Lötofen die Schichten miteinander verbinden.

Die Vertiefung bzw. die Vertiefungsreihen zur Bildung eines Hochleistungs-Temperierkanals können mit verschiedenen Fertigungsmethoden wirtschaftlich in das Blech bzw. in die Schicht eingebracht werden. Es kommen spanabhebende bzw. materialabtragende Fertigungsverfahren und auch materialverdrängende Verfahren zur Anwendung. Eine weitere Fertigungsalternative ist die Gusstechnik.

Unter spanabhebende Fertigungsverfahren werden z.B. das Bohren, Fräsen, Hobeln und Drehen verstanden. Materialabtragende Verfahren sind z.B. auch das Ätzen und das Erodieren. Je nach Vertiefungsgröße und -form könnte auch eine materialverdrängende Schmiede- oder Prägetechnik eine wirtschaftliche Fertigungsalternative sein. Werden besonders große Stückzahlen von gleichgestalteten Schichten benötigt, können auch Gussverfahren zur Anwendung kommen. Die gegossenen Schichten brauchen nur noch zu einem Kanal verschweißt oder gelötet werden.

Im erfindungsgemäßen Hochleistungs-Temperierkanal ist die Wärmeaustauschfläche um mehr als 10 % bezogen auf die ermittelte Blech- bzw. Schichtfläche des Strömungsbereichs der Einzelschicht erhöht im Vergleich zu den aus dem Stand der Technik bekannten Wärmeaustauscher mit halbiertem flachen Rechteckkanal und gleichem Strömungskanalquerschnitt. In einer bevorzugten Ausführungsform ist die Wärmeaustauschfläche 10 % bis 70 %, besonders bevorzugt 10 % bis 50 % gegenüber dem Stand der Technik erhöht.

Die Gusstechnik bietet auch die Möglichkeit, durch das Verwenden von Formkernen ein Hochleistungs-Temperierkanal einstückig herzustellen, so dass ein Längsschweißen von den Schichten mit Vertiefungen entfällt. Einen Hochleistungs-Temperierkanal durch Gusstechnik herzustellen, ist dann wirtschaftlich, wenn Werkstoffe mit hohen Wärmeleitzahlen wie z.B. Aluminium und Kupfer und deren Legierungen aus anwendungstechnischer Sicht zum Einsatz kommen können.

Deshalb ist ein bevorzugter Gegenstand der vorliegenden Erfindung, dass ein Hochleistungs-Temperierkanal im Gussverfahren einstückig hergestellt wird.

In einer Blechtafel z.B. können mehrere parallel nebeneinander angeordnete Vertiefungsreihen eingearbeitet werden, so dass nach gleichem Prinzip zwei aufeinander gelegte Blechtafeln auch größere Produktströme in kurzer Zeit schnell und schonend temperieren können. Parallel nebeneinander angeordnete Vertiefungsreihen in Blechtafeln können in einem Arbeitsvorgang gleichzeitig eingebracht werden, so dass Fertigungskosten noch einmal erheblich reduziert werden können.

Blechtafeln mit mehreren Vertiefungsreihen bilden die technische Grundlage zum Bau von preiswerten Kanal-Wärmeaustauschern öder Platten-Wärmeaustauschern.

In einer bevorzugten Ausführungsform bestehen die als Bleche bezeichneten Bauteile eines Hochleistungs-Temperierkanals aus korrosionsfesten Werkstoffen. Beispielhaft seien hier Glas, Keramik, Graphit, leitfähige Kunststoffe, insbesondere UVdurchlässige und beständige Kunststoffe, Chrom-Nickel-Stahl, Nickellegierungen und Nicht-Eisenwerkstoffe wie beispielsweise Aluminium genannt.

In einer weiteren bevorzugten Ausführungsform werden die Vertiefungen in den Blechen, die Bauteile eines Hochleistungs-Temperierkanals bzw. Strömungskanals sind, mit einem Katalysator beschichtet um eine im Strömungskanal ablaufende Reaktion zu beschleunigen bzw. zu fördern.

Im Rahmen der Arbeiten zur vorliegenden Erfindung wurde gefunden, dass je größer die Längenausdehnung einer Vertiefung bei entsprechend geringer Vertiefungsbreite in Hauptströmungsrichtung ist, sich eine Vertiefung mit mehreren Vertiefungen des gegenüberliegenden Bleches überschneidet und kreuzt. Dies verstärkt die horizontale Mischwirkung und verbessert den Temperierprozess. Infolgedessen entstehen keine großen Temperaturgradienten im zu temperierenden Stoffstrom.

Zur Erzielung dieses Effektes wählt man ein Höhen- / Breitenverhältnis einer Vertiefung in den Blechen von größer 1, bevorzugt größer 5 und besonders bevorzugt größer 10.

Die berücksichtigte Höhe zur Bildung des Höhen-/Breitenverhältnisses entspricht der inneren Breite des Flachkanals. Die Breite der,Vertiefung entspricht der Vertiefungsausdehnung in Hauptströmungsrichtung bzw. Kanallänge.

Die vorliegende Erfindung betrifft Hochleistungs-Temperierkanäle, in denen jede Vertiefung einer Einzelschicht sich mit mindestens 3 Vertiefungen der gegenüberliegenden Schicht bzw. Löchern des Lochbleches überschneidet bzw. überlappt, bevorzugt mit mehr als fünf Vertiefungen oder Löchern und besonders bevorzugt mit mehr als zehn Vertiefungen der gegenüberliegenden Vertiefungsreihe der zweiten Schicht oder Löchern des Lochbleches kreuzt oder überschneidet.

Im Rahmen der vorliegenden Erfindung wurde überraschenderweise gefunden, dass die Ausbildung einer großen Höhe einer Vertiefung das Trägerblech hinsichtlich der auftretenden Druckbelastung kaum schwächt. Die innenliegenden produktseitigen Rippen zwischen den Vertiefungen stabilisieren das Trägerblech hinsichtlich großer auftretender Differenzdrücke und dienen als Verstärkungsrippen, so dass eine Versteifung vorliegt die einer hohen Druckbelastung stand hält und keine weiteren Abstützungen für den Hochleistungs-Temperierkanal notwendig sind.

Aufgrund unterschiedlicher Wandstärken zur Heiz- bzw. Kühlseite erhöht sich die Wärmeübertragungsleistung, da eine lokal geringere Wandstärke einen niedrigeren Wärmedurchgangswiderstand hat. Die Randbereiche zwischen den nebeneinander liegenden Vertiefungen, auch als Verstärkungsrippen bezeichnet, haben aufgrund der Materialdicke zum Temperierraum einen höheren Wärmeleitwiderstand, so dass zwischen voller Trägerblechdicke und geringster Blechstärke mit einem mittleren Wärmeleitwiderstand gerechnet werden muss.

Die Randbereiche der Vertiefungen bilden zusätzlich eine Heizflächenvergrößerung, so dass die Leistungsfähigkeit des Hochleistungs-Temperierkanals sich erhöht.

Strömungstechnisch wird das zu temperierende Medium beim Einfließen in den Strömungsquerschnitt des Kanals mit Vertiefungen verwirbelt und die Wärmeübertragungsleistung erhöht. Insbesondere die scharfkantigen Übergänge an den Vertiefungsrändern sorgen für einen zusätzlichen Strömungsabriss mit Verwirbelung.

Die Erfindung betrifft deshalb bevorzugt Hochleistungs-Temperierkanäle, in denen die Vertiefungen in den Blechen eine Höhe von bis zu 90 %, bevorzugt von größer 10 % bis kleiner 70 % und besonders bevorzugt von größer 10 % bis kleiner 60 % der Blechdicke aufweisen.

Im Rahmen der vorliegenden Erfindung wurde gefunden, dass der Winkel α (Fig. 1) in Verbindung mit dem Höhen-/Breitenverhältnis die Überlappungs- und Kreuzungshäufigkeit der gegenüberliegenden Vertiefungen bestimmt und Einfluss auf den entstehenden Differenzdruck des Strömungskanals bei konstanter Fluidgeschwindigkeit nimmt. Je kleiner der Winkel α bei konstantem Höhen-/Breitenverhältnis, desto geringer ist der Druckverlust.

Die vorliegende Erfindung betrifft deshalb bevorzugt Hochleistungs-Temperierkanäle, worin die geometrische Längsachse der Vertiefungen in den Blechen unter einem bevorzugten Winkel α von 20 bis 70 Grad und besonders bevorzugt unter einem Winkel von 40 bis 50 Grad zur Vertiefungsreihe bzw. zur Hauptströmungsrichtung steht.

Im Rahmen der vorliegenden Erfindung wurde gefunden, dass aufgrund der großen wärmeübertragenden Fläche bei gleichzeitig geringem Hold-up man nur eine geringe Länge des Hochleistungs- Temperierkanals benötigt, um einen nahezu vollständigen Temperaturausgleich zwischen Temperiermittel und Stoffstrom zu erreichen. Besonders vorteilhaft ist die Anwendung der erfindungsgemäßen Hochleistungs-Temperierkanäle wenn nur kleine Temperaturdifferenzen zwischen Temperiermittel und zu temperierendem Stoff vorliegen.

Die Erfindung betrifft deshalb bevorzugt Hochleistungs-Temperierkanäle, worin die Vertiefungsreihe eines Bleches oder einer Schicht weniger als 1000 Vertiefungen hat, bevorzugt weniger als 500 Vertiefungen und besonders bevorzugt weniger als 250 Vertiefungen aufweist.

Im Rahmen der vorliegenden Erfindung wurde gefunden, dass man Strömungskanäle mit wesentlich geringerem Druckverlust erhält, wenn diese aus zwei Seitenblechen und einem oder gegebenenfalls weiteren Zwischenblechen mit Löchern bestehen.

In diesem Fall wird zwischen zwei Blechen mit einseitig eingebrachten Vertiefungen (auch als Seitenblech bezeichnet) eines oder mehrere zusätzliche Bleche mit einer oder mehreren Lochreihen, gleicher oder gegebenenfalls unterschiedlicher Geometrie wie die Vertiefungen der Seitenbleche, jedoch ohne den Breitenbereich der Vertiefungsreihen zu überschreiten, eingefügt.

Die Erfindung betrifft Strömungskanäle bestehend aus zwei Blechen mit einseitig eingebrachten Vertiefungsreihen und mindestens einem zwischen diesen beiden Blechen eingesetzten Blech mit einer oder mehreren Lochreihen, wobei die Lochreihen den Breitenbereich der Vertiefungsreihen nicht überschreiten, so dass ein Strömungskanal aus mindestens drei Blechen /Schichten entsteht, der einen wesentlich verringerten Druckverlust hat.

Das eingesetzte Lochblech dient als zusätzlicher Turbulenzerreger bzw. Turbulenzerzeuger, reduziert bei konstantem Volumenstrom den Druckverlust und erzeugt im verlöteten Zustand keine zusätzlichen Spalten.

Eingesetzte Lochbleche werden in der Regel mit den benachbarten äußeren Blechen verschweißt oder verlötet. Lochbleche können auch als lösbare Turbulenzerzeuger in Hochleistungs-Temperierkanäle eingesetzt werden.

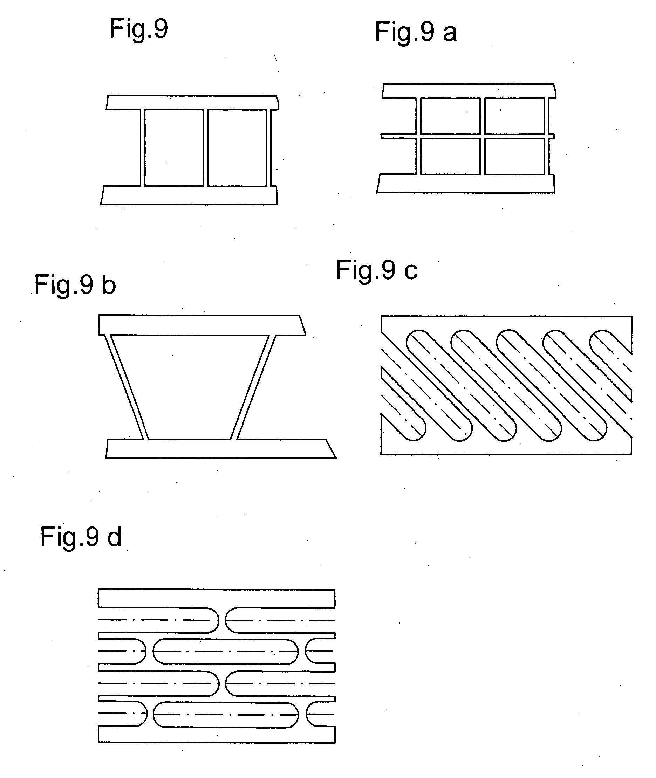

Die Lochbleche können unterschiedliche Öffnungen (Fig. 9 bis 9d ) haben, so dass in den Blechtrennebenen Öffnungs- und Vertiefungsflächen gleich und oder verschieden sind. Die Wahl welche Geometrie für einen Hochleistungs-Temperierkanal zum Einsatz kommt richtet sich nach der jeweiligen Temperieraufgabe.

Man erhält die Öffnungen in diesen Lochblechen durch Stanzverfahren, Ätzverfahren oder Senkerodierverfahren.

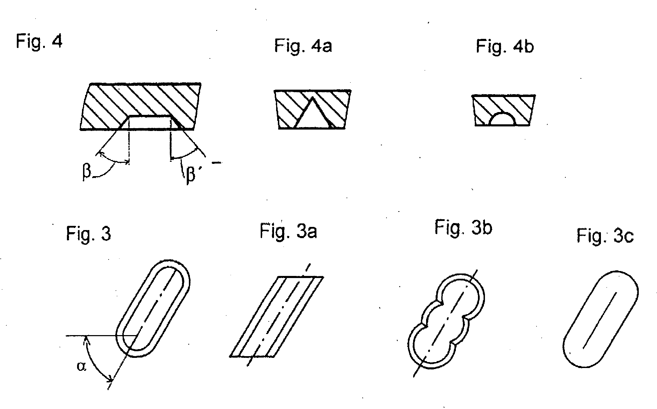

Erfindungsgemäß . können Vertiefungen unter Beibehaltung der Schichtdicke durch ein Präge- oder ein Senkschmiedeverfahren in das Blech eingepresst werden. Es handelt sich hier um Verfahren der Umformtechnik. Vorzugsweise zeigen die Vertiefungen die Form von Nuten mit halbkreisförmigem Querschnitt (Fig. 4, Fig. 4a, Fig. 4b).

Die Fläche der Vertiefungen in den Blechen kann unterschiedlicher Geometrie sein und kann an die zu temperierenden Substanzen angepasst bzw. optimiert werden (Fig. 3, Fig. 3a, Fig. 3b, Fig. 3c). Die gezeigten Beispiele sind nur beispielhaft aber nicht limitierend.

Die als Bleche bezeichneten Werkstücke sind an den Längskanten miteinander verschweißt, bevorzugt parallel zu den Vertiefungsreihen. Bevorzugte Schweißverfahren sind WIG (Schutzgasschweißen), Laser, EB (Elektro-Beam-Schweißen) oder das Rollnahtverschweißen.

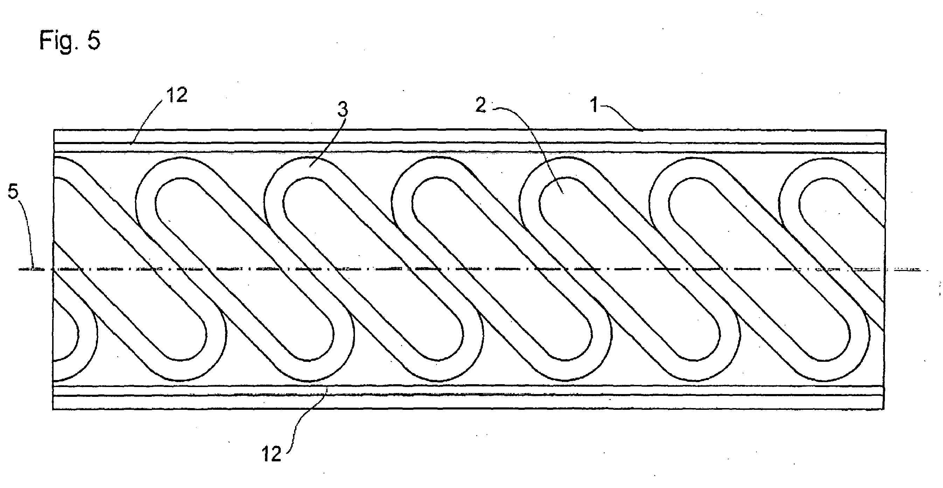

In einer bevorzugten Ausführungsform der Hochleistungs-Temperierkanäle sind in den Randbereichen der Trägerbleche Vertiefungen zur Aufnahme eines Lots vorgesehen, wobei die Vertiefungen die Funktion eines Lotdepots wahrnehmen. Die Vertiefungen zur Aufnahme des Lots sind durch Kanäle bzw. Nuten miteinander verbunden, so dass eine homogene Verlötung statt finden kann. Die Lotdepots sind kleiner als die produktberührten Vertiefungen (Fig. 5).

Die Kanäle oder Nuten zur Aufnahme des Lots können so positioniert werden, dass nach dem Verlöten ein spaltfreier Hochleistungs-Temperierkanal entsteht. Die spaltfreie Ausführung ist besonders vorteilhaft für Anwendungen in der Lebensmittel-, Pharma- und biotechnischen Industrie.

Erfindungsgemäß bilden zwei gegeneinander liegende Bleche mit eingebrachten Vertiefungen sowie mit dazwischenliegendem Lochblech einen geschlossenen produktführenden Strömungskanal mit hoher Wärmeübertragungsleistung den erfindungsgemäßen Hochleistungs-Temperierkanal. Es kann dazu kommen, dass die äußere Temperierfläche des Drei-Schichtensystems zu klein ist, so dass die äußeren, produktabgewandten Seiten ebenfalls mit Vertiefungen zur Bildung von Temperierrippen versehen werden können. Dies vergrößert die äußere Temperierfläche wesentlich.

Werden die erfindungsgemäßen Hochleistungs-Temperierkanäle als Kühler eingesetzt und ist das Kühlmedium z.B. Luft, dann kann die äußere Kühlfläche des Hochleistungs-Temperierkanals mit Kühlrippen versehen werden, die ggf. auch mit dem Kanal verlötet sind.

Die erfindungsgemäßen Hochleistungs-Temperierkanäle, gebildet aus mindestens zwei Blechen mit einseitigen Vertiefungsreihen und einem Lochblech, können mit bekannten Strömungskanälen, wie z.B. einfache Rohre die mit bekannten Statikmischern bestückt sind oder z.B. sogenannten Profilrohren mit Turbulenzeinsätzen oder Flachkanälen kombiniert werden.

Sie sind hervorragend geeignet als Strömungsreaktoren für die Durchführung von chemischen Reaktionen.

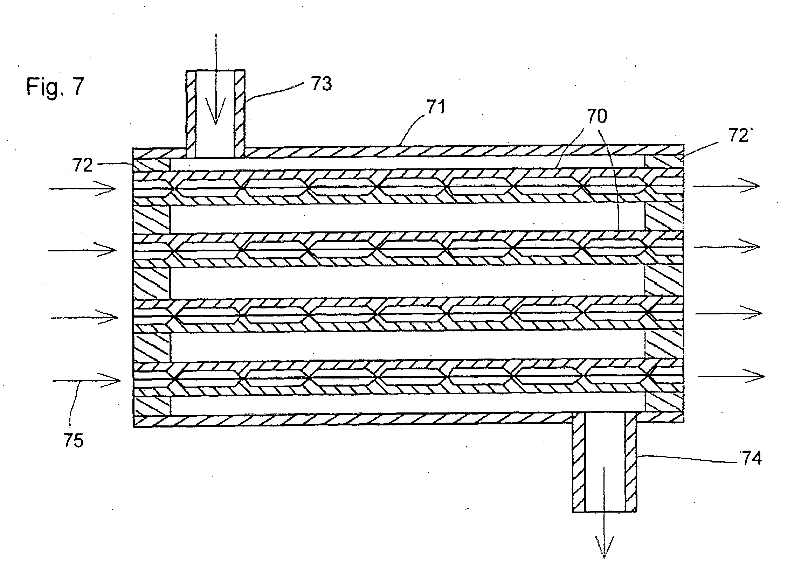

Mehrere parallel angeordnete erfindungsgemäße Hochleistungs-Temperierkanäle, bestehend jeweils aus drei dicht verschweißten oder verlöteten Blechen/Schichten mit inneren Strukturen bzw. Löchern wobei die Strukturen Vertiefungen sind und Vertiefungsreihen bilden, können gleichzeitig angeströmt werden und einen Kanal-Bündel-Wärmeaustauscher oder einen Platten-Kanal-Wärmeaustauscher bilden (Fig. 7).

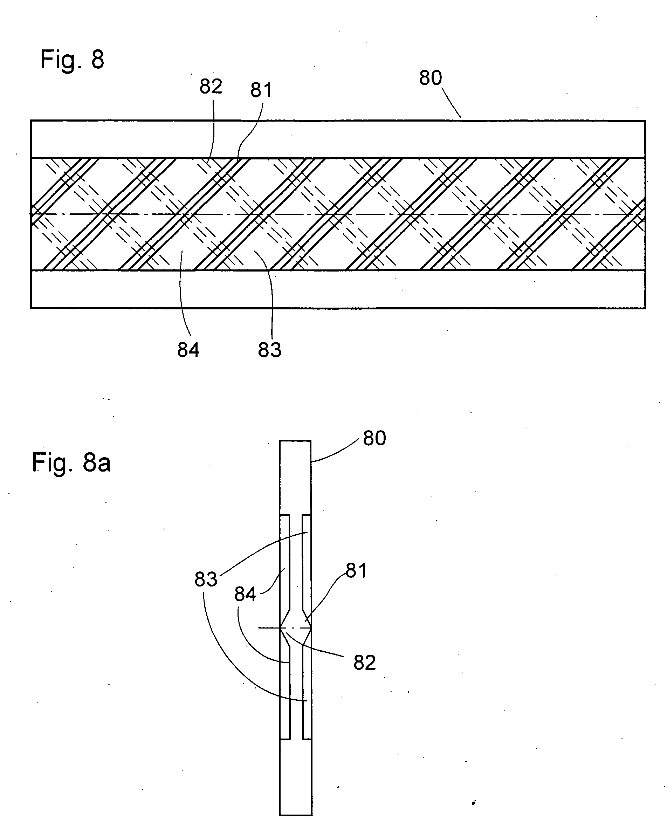

Übereinander geschichtete und jeweils zueinander um 90° versetzt angeordnete erfindungsgemäße Hochleistungs-Temperierkanäle können einen Kreuzstrom-Wärmeaustauscher bilden. Beim Kreuzstrom-Wärmeaustauscher werden auf der Produkt- und auf der Temperierseite jeweils Hochleistungs-Temperierkanäle mit kleinem Hold-up und geringem Verweilzeitspektrum verwendet, so dass ein intensiver Temperaturausgleich bei geringem Produkt- und Temperiermittelvolumen erfolgt (Fig. 8).

Vorteilhaft ist dabei die Verwendung von Schichten mit beidseitig eingebrachten Vertiefungen in den Außenblechen um die Anzahl der Schichten zu minimieren und die kompakte Bauweise zu fördern. Eine Druckverlustminderung wird beim Kreuzstrom-Wärmeaustauscher erreicht, wenn auf der druckkritischen Seite des Wärmeaustauschers Hochleistungs-Temperierkanäle mit einem eingelegten Lochblech verwendet werden.

Die erfindungsgemäßen Hochleitungs-Temperierkanäle mit Lochblech aber auch Strömungskanäle die nur aus zwei Außenblechen (also ohne Lochblech) bestehen können auch in einem Kreuzstrom-Wärmeaustauscher eingesetzt werden und eignen sich außerdem als Strömungskanäle
- in einem Sterilisator für die Sterilisation von Wasser, von pharmazeutischen oder biologischen Substanzen
- für den Einsatz in Photobioreaktoren für die Züchtung von Mikroorganismen.

Die erfindungsgemäßen Hochleistungs-Temperierkanäle mit Lochblech aber auch Strömungskanäle ohne Lochblech eignen sich weiterhin als miniaturisierte Strömungskanäle auf Chips für die Diagnostik.

### Figuren und Beispielbeschreibung:

- Fig. 1:: zeigt einen Blechstreifen mit nebeneinander positionierten erodierten Vertiefungen die zur Hauptströmungsrichtung unter dem Winkel α stehen.
- Fig. 1 a:: stellt die Schnittdarstellung eines Blechstreifens gemäß Fig. 1 dar, aus der zu erkennen ist, dass die unter dem Winkel α stehenden Seitenflächen der Vertiefungen einen weiteren Winkel β zur (abströmende Seite) bzw. β' (einströmende Seite) Strömungsrichtung 9 aufweisen.
- Fig. 2:: zeigt zwei aufeinander gelegte Blechstreifen gemäß Fig. 1 die einen Flachkanal für einen Wärmeaustauscher bilden und das obere Blech (1') bis zur Fußfläche der Vertiefung teilweise geöffnet ist, so dass die übereinander liegenden Vertiefungen sichtbar sind.
- Fig. 2a:: zeigt den Flachkanal aus Fig. 2 mit Hauptströmungsrichtung (9) mit den gegenüberliegenden inneren Vertiefungsreihen.
- Fig. 3, 3 c:: zeigt verschiedene Konturen der Vertiefungen.
- Fig. 4, 4b:: zeigt Querschnitte der Vertiefungen.
- Fig. 5:: zeigt Blechstreifen die im Randbereich Nuten haben, die Lötdepots dienen.
- Fig. 6:: zeigt Vertiefungsreihen gebildet mit einer Vertiefung nach Fig. 3 in einem Strömungskanal ohne Lochblech dazwischen.
- Fig. 7:: stellt eine parallele Anordnung von Hochleistungs-Temperierkanälen mit Vertiefungsreihen dar, die in einem temperierten Gehäuse eingesetzt und verschweißt sind und einen Kanal-Wärmeaustauscher bilden.
- Fig. 8: zeigt ein Blech mit beidseitig eingebrachten Vertiefungen.
- Fig. 8a: zeigt die Stirnseite des beidseitig mit Vertiefungen versehenen Bleches.
- Fig. 9-9d: zeigt verschiedene Öffnungsformen und Öffnungsanordnungen zur Gestaltung eines Lochbleches.

### Figurenbeschreibung:

In Fig. 1 ist ein Trägerblech 1 mit Vertiefungen 2 dargestellt. Die Vertiefungen haben eine trapezförmige Querschnitts-Fläche, die auf Abstand nebeneinander in das Blech bzw. in die Schicht eingearbeitet sind und dadurch eine Vertiefungsreihe 2', 2" bilden. Die geometrische Ausdehnungsachse 4 der Vertiefungen steht mit einem Winkel α quer zur Mittenachse 5 der Vertiefungsreihe bzw. zur Hauptströmungsrichtung 9. An den Blechenden 6, 6' sind die Vertiefungen der Vertiefungsreihe nur zum Teil ausgebildet, so dass es zu Einströmöffnungen 7 und zu Ausströmöffnungen 8 an den Enden des Blechs kommt. Die Vertiefungsreihe 2, 2', 2" bildet gleichzeitig die Hauptströmungsrichtung 9 des zu bildenden Temperierkanals. Oberhalb und unterhalb der Vertiefungsreihe befindet sich ein schmaler Randbereich 10, der am jeweiligen äußeren Randbereich verschweißt bzw. verlötet werden kann um einen druckdichten Strömungskanal mit hoher Temperierleistung herzustellen.

In Fig. 1a ist das Trägerblech 1 in einem Schnitt dargestellt. Zu erkennen ist die Trägerblechdicke 11 und die Vertiefungen 2, deren Höhe kleiner ist als die Trägerblechdicke. Die Tiefe der Vertiefung beträgt in dieser Ausführung 50 % der Blechdicke. In der Schnittdarstellung ist zu erkennen, dass in Durchströmrichtung die Seitenfläche der einströmenden Seite 3 unter einem Winkel β' steht und die Seitenfläche der abströmenden Seite 3' unter einem Winkel β steht, so dass die Vertiefung optimal durchströmt wird, eine vertikale Mischwirkung zur gegenüberliegender Vertiefungsreihe unterstützt wird und dadurch keine Produktablagerungen auftreten können.

In Fig. 2 sind beide Schichten oder Bleche 1,1' aufeinander gelegt, wobei das zweite Blech 1' um 180 Grad gewendet wurde und auf dem unteren Blech 1 liegt, und das obere Blech 1' teilweise bis zum Fuß der Vertiefung geöffnet ist. Zu erkennen sind die sich überlappenden und kreuzenden Vertiefungen und die zwischen den Vertiefungen ausgebildeten inneren Stege, die eine horizontale Mischwirkung parallel zur Längsausdehnung der Vertiefungen, durch Umlenkung und Teilung des Hauptstroms erzeugen. Bei druckbeaufschlagten Strömungskanälen wirken die innenliegenden Stege gleichzeitig als Verstärkungsrippen und erhöhen dadurch die Druckstabilität.

In Fig. 2a ist der in Fig. 2 dargestellte zweischichtige Kanal, jedoch in der Länge verkürzt, im Schnitt dargestellt. Deutlich ist zu erkennen, dass die in Strömungsrichtung unter dem Winkel β stehenden Seitenflächen 3 der Vertiefungen 2, eine vertikale Mischwirkung unterstützen und praktisch keine nicht ausreichend durchströmte Bereiche bilden. Des Weiteren ist zu erkennen, dass die Rippen-Kreuzungspunkte der Vertiefungen nur punktuell aufeinander liegen und es im durchströmten Bereich zu keiner großen Spaltbildung kommt. In dieser aufgeführten Version ist das Verhältnis von Vertiefungsbreite zum Mittenabstand = 1.

In Fig. 3 bis 3c sind verschiedene Formen von Vertiefungsflächen gezeigt. Fig. 3 zeigt ein längliche Vertiefung mit schräg gestellten Seitenflächen. Fig. 3a stellt eine Form dar, die typischerweise im Senkerodierverfahren hergestellt werden kann, so dass die in Strömungsrichtung befindlichen Seitenflächen der Vertiefung unter einem Winkel stehen und die obere und untere Randfläche der Vertiefung senkrecht ins Blech verläuft. Fig. 3b zeigt eine längsausgedehnte Vertiefung die durch mehrere Senkbohrungen ausgebildet werden kann. Fig. 3c zeigt typischerweise eine Vertiefung, die spanabhebend mit einem Radien- bzw. Kugelfräser erzeugt wurde. Vorteilhaft bei dieser Form ist, dass alle Bereiche gut durchströmt werden und das Verweilzeitspektrum gering ist.

In den Fig. 4 bis 4 b werden verschiedene bevorzugte Querschnittsformen von Vertiefungen gezeigt, z.B. eine trapezförmige (Fig. 4), spitzwinkelige Ausführung in Form eines Dreiecks (Fig. 4a) und einen Kreisabschnitt (Fig. 4b) bzw. einen Halbkreis. Die Querschnittsform der Fig. 4b entspricht der Vertiefungsflächenform aus Fig. 3c. Aus den Fig. 3 bis 3c und 4 bis 4b ist zu erkennen, dass Vertiefungen zur besseren Strömungsführung immer leitende Flächen bilden.

Die Fig. 5 zeigt einen Abschnitt eines Bleches 1 mit z. B. längsausgedehnten Vertiefungen 2 mit der Querschnittsform gemäss Fig. 4 und einer Vertiefungsfläche entsprechend der Fig. 3, wobei am oberen und unteren Ende der Vertiefung ein Radius angeordnet ist. Oberhalb und unterhalb der dargestellten Vertiefungsreihe ist eine parallel zur Mittenachse 5 der Vertiefungsreihe verlaufende Nut 12 vorgesehen zur Aufnahme eines Lots. Die Nut zur Aufnahme des Lots kann auch an der äußeren Kontur der Vertiefungsreihe angepasst sein, so dass eine Verlötung alle Spalte der zwei aufeinander liegenden Bleche mit Vertiefungsreihen verschließt und eine Produktablagerung verhindert. Selbst bei einem zwischengesetzten Lochblech zur Verminderung des Strömungsverlustes werden alle Spalte im Randbereich der Vertiefungsreihe geschlossen.

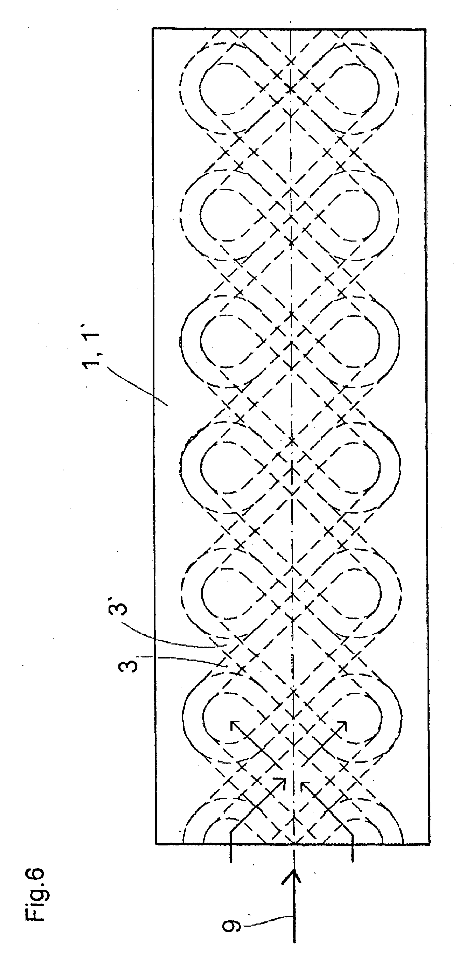

In Fig. 6 ist ein Strömungskanal dargestellt, der aus zwei aufeinander gelegten Blechen 1, 1' mit Vertiefungen, ähnlich wie in Fig. 5 gezeigt, gebildet wird. Es ist deutlich zu erkennen, dass ein Fluid im Einströmbereich entlang der Durchströmrichtung 9 des Kanals, aufgrund von überlappenden und kreuzenden Vertiefungen, geteilt und anschließend wieder zusammen geführt wird. Diese parallel zur Blechbreite produzierten Strömungsvorgänge erzeugen einen horizontalen Mischeffekt, während die unter einem Winkel β stehenden Seitenflächen 3, 3' der Vertiefungen für den vertikalen Mischeffekt sorgen.

Fig. 7 stellt beispielhaft eine parallele Anordnung von Hochleistungs-Temperierkanälen 70 dar, die parallel durchströmt werden. Die Hochleistungs-Temperierkanäle sind in einer An- und Abströmplatte 72, 72' eingesetzt und mit dieser verschweißt. Die Anströmplatte 72 auf der Eintrittseite und die Abströmplatte 72' auf der Austrittseite des Produkts sind wiederum in ein Gehäuse 71 eingesetzt und verschweißt. Das Gehäuse 71, welches gleichzeitig den Temperierraum bildet, hat einen Temperiermittel-Zuführstutzen 73 und einen Temperiermittel-Abführstutzen 74. Es kann ein Kälteträger- oder ein Wärmeträgermittel in das Gehäuse 71 eingespeist werden, um die Hochleistungs-Temperierkanäle und das durch diese hindurchströmende Produkt 75 gleichmäßig, schnell und schonend zu temperieren. Zur besseren Montage des Wärmeaustauschers in vorhandene Anlagen werden, hier in der Skizze nicht dargestellt, Anschlussmöglichkeiten, wie z. B. Flansche oder produktseitige Stutzen vorgesehen.

In Fig. 8 ist ein Blech 80 für einen Temperierkanal mit beidseitig eingebrachten Vertiefungen 83, 84 dargestellt. Zu erkennen sind die unter einem Winkel stehenden Randflächen bzw. Stege 81 der Vertiefungen. Die Stege 82 der Vertiefungen auf der Blechrückseite sind mit unterbrochenen Linien dargestellt.

Die Fig. 8a zeigt die Stirnseite bzw. die An- oder Abströmseite des Bleches 80. Die Figur zeigt deutlich, dass aufgrund der beidseitig eingearbeiteten Vertiefungen 83, 84 die verbleibende Blechdicke im Bereich der Vertiefungen sehr dünn werden kann.

Die Fig. 9 bis 9d zeigen verschiedene Lochmuster und Lochanordnungen zur Ausgestaltung eines turbulenzerregenden Lochbleches für den Hochleistungs-Temperierkanal. Dabei können Lochreihen einreihig oder auch mehrreihig, parallele oder versetzt angeordnete Öffnungen je nach Aufgabenstellung nützlich sein. Es ist jedoch darauf zu achten, dass zum angrenzenden Blech mit Vertiefungen nicht gleichartige und gleichgerichtet Geometrien mit gleich großen Flächen in der Blechtrennebene positioniert sind.

## Patentansprüche

1. Hochleistungs-Temperierkanäle aus zwei aufeinander entgegengesetzt gelegten Blechen, die in ihrer Trenn- bzw. Kontaktebene eingebrachte einseitige Vertiefungen haben, **dadurch gekennzeichnet, dass**
die Höhe des einzelnen Hochleistungs-Temperierkanals nicht größer ist als die Dicke der verwendeten Bleche,
materialabtragend und/oder materialverdrängend einzelne Vertiefungen in das Blech eingearbeitet sind und dabei scharfkantige Ränder zur Blechtrennebene bilden und die Blechdicke im Vertiefungsbereich sich lokal bis zu 90 % reduziert, und in der Blechtrennebene Vertiefungen mit gleicher Vertiefungsfläche und gleichem Vertiefungsvolumen nebeneinander liegen und keine Verbindung zueinander haben und mehrere nebeneinander liegende Vertiefungen eine Vertiefungsreihe oder Vertiefungskette bilden,
die geometrische Fläche einer jeden Vertiefung in der Blechtrennebene eine größere Ausdehnung zur Blechbreite als zur Blechlänge hat,
die größere Längsachse der Vertiefung unter einem Winkel α von 5 bis zu 85 Grad zur Mittelachse der Vertiefungsreihe oder Vertiefungskette steht, wobei das eine Blech gegenüber dem anderen Blech um 180° gewendet ist, wodurch mindestens drei der unter gleichem Winkel stehenden Vertiefungen sich teilweise überlappen und/oder kreuzen und einen Durchflusskanal bilden, dessen Strömungsquerschnitt im Bereich der Blechtrennebene ist,
zwischen die Bleche oder Schichten mindestens ein Lochblech als Turbulenzerreger eingesetzt wird
und dieser Durchflusskanal druckstabil ist.

2. Hochleistungs-Temperierkanäle gemäß Anspruch 1, **dadurch gekennzeichnet, dass** der zugehörende zuleitende und ableitende Versorgung-Strömungsquerschnitt größer ist, als der Strömungsquerschnitt des Hochleistungs-Temperierkanals.

3. Hochleistungs-Temperierkanäle gemäß Anspruch 1, **dadurch gekennzeichnet, dass** die geometrische Fläche der Vertiefung mit zunehmendem parallelen Abstand zur Kontaktebene der Schichten kleiner wird und in der Blech- bzw. Schichtdicke parallel zur Längsausdehung der Vertiefung eine Wand bildet, die den durchströmenden Stoff in die jeweils kreuzenden bzw. überlappenden gegenüberliegende Vertiefungen lenkt.

4. Hochleistungs-Temperierkanäle gemäß Anspruch 1, **dadurch gekennzeichnet, dass** die Wärmeaustauschfläche um mehr als 10 % bezogen auf die ermittelte ebene Blech- bzw. Schichtfläche des Strömungsbereichs der Einzelschicht erhöht ist.

5. Hochleistungs-Temperierkanäle gemäß Anspruch 1, **dadurch gekennzeichnet, dass** die verwendeten Bleche bzw. Schichten eine Dicke von größer 0,5 mm bis kleiner 50 mm haben.

6. Hochleistungs-Temperierkanäle gemäß Anspruch 1, **dadurch gekennzeichnet, dass** der Mittenabstand zweier Vertiefungen einer Vertiefungsreihe mindestens so groß ist wie die Breite der Vertiefung um einen spaltarmen Temperierkanal zu gestalten

7. Hochleistungs-Temperierkanäle gemäß Anspruch 2, **dadurch gekennzeichnet, dass** das Verhältnis von Vertiefungsbreite zum Mittenabstand größer 1 bis kleiner 2, beträgt.

8. Hochleistungs-Temperierkanäle gemäß Anspruch 1, **dadurch gekennzeichnet, dass** jede Vertiefung der Einzelschicht sich mit mindestens 5 Vertiefungen der gegenüberliegenden Schicht bzw. Löchern des Lochbleches überschneidet bzw. überlappt.

9. Hochleistungs-Temperierkanäle gemäß der Ansprüche 1 bis 4, **dadurch gekennzeichnet, dass** die Vertiefungen eine bevorzugte Höhe von größer 10 % bis kleiner 70 % und eine besonders bevorzugte Höhe von größer 10 % bis kleiner 60 % der Blechdicke haben.

10. Hochleistungs-Temperierkanäle gemäß Ansprüche 1 bis 5, **dadurch gekennzeichnet, dass** die geometrische Längsachse der Vertiefungen unter einem bevorzugten Winkel α von 20 bis 70 Grad und besonders bevorzugt von 40 bis 50 Grad zur Vertiefungsreihe bzw. zur Hauptströmungsrichtung steht.

11. Verwendung der Hochleistungs-Temperierkanäle der Ansprüche 1 bis 10 zur produktschonenden Temperierung von gasförmigen oder flüssigen Medien/Mischungen bis zu einem Viskositätsbereich von kleiner 100 000 mPa·s.

12. Verwendung der Hochleistungs-Temperierkanäle der Ansprüche 1 bis 10 aber auch ohne Lochblech als Strömungsreaktor für die Durchführung von chemischen Reaktionen.

13. Verwendung der Hochleistungs-Temperierkanäle der Ansprüche 1 bis 10 aber auch ohne Lochblech
- in einem Platten-Kanal-Wärmetauscher oder in einem Kreuzstrom-Wärmeaustauscher,
- als Strömungskanäle in einem Sterilisator für die Sterilisation von Wasser, von pharmazeutischen oder biologischen Substanzen,
- als Strömungskanäle für den Einsatz in Photobioreaktoren für die Züchtung von Mikroorganismen
- oder als miniaturisierte Strömungskanäle auf einem Chip für die Diagnostik.

14. Hochleistungs-Temperierkanäle gemäß Anspruch 1, **dadurch gekennzeichnet, dass** die Lochbleche als lösbare Turbolenzerreger eingesetzt werden.

15. Hochleistungs-Temperierkanäle gemäß Anspruch 1 oder 14, **dadurch gekennzeichnet, dass** Lochbleche mit unterschiedlichen Öffnungen in den Blechtrennebenen zu Öffnungs- und Vertiefungsflächen gleicher oder verschiedener Geometrie führen.
